# EUROPEAN PATENT APPLICATION

(11) **EP 0 905 172 A1**
(43) Date of publication of application: **31.03.1999**
(21) Application number: 97925289.7
(22) Date of filing: 06.06.1997
(51) Int. Cl.: C08G 77/60

(54) **POLYSILANES AND POSITIVE HOLE TRANSPORTING MATERIALS**

(30) Priority: 07.06.1996 JP 146062/96
(71) Applicant: OSAKA GAS CO., LTD., Osaka-shi, Osaka-fu 541 (JP)
(72) Inventor: NISHIDA, Ryoichi, Ikoma-shi, Nara 630-01 (JP); KAWASAKI, Shinichi, Kyotanabe-shi, Kyoto 610-03 (JP); MURASE, Hiroaki, Kyoto-shi, Kyoto 616 (JP); FUJIKI, Tsuyoshi, Kyoto-shi, Kyoto 601 (JP)
(74) Representative: W.P. THOMPSON & CO.
(86) International application number: JP9701928
(87) International publication number: WO9746605

(57) **Abstract**

This invention provides a polysilane (1) and a polysilane (2) shown below which exhibit a good hole transporting characteristic when used for electrophotographic photoreceptors, organic electroluminescent devices or the like:

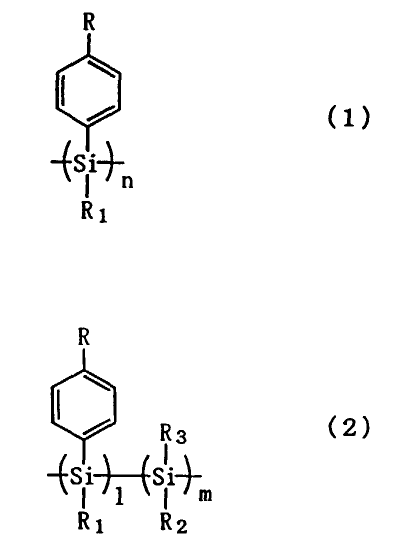

## Description

### Field of the Invention

The present invention relates to novel polysilane compounds. The polysilane compounds of this invention are excellent in film-forming property, flexibility, optoelectronic function and the like, and are useful as an organic hole transporting material, a photoresist material and so on which are used for electrophotographic photoreceptors, organic electroluminescent devices, thin film transistors, rectifying devices, etc.

### Background Art

Generally a material with a hole drift mobility such as a low molecular pigment has been dispersed in a binder resin to produce a hole transporting material useful for an electrophotographic photoreceptor or the like. However, this procedure poses problems such as degradation of properties arising due to precipitation and/or crystallization of a pigment.

Since organic electroluminescent devices require a high hole drift mobility, a pigment or the like is formed into a film by vacuum deposition without use of a binder resin. This procedure, however, necessitates a large-scale vacuum device and entails a low productivity. Further the procedure suffers a problem of property degradation owing to crystallization of a pigment.

Researches are under way to discover a hole transporting polymer material which is free of the foregoing drawbacks, namely which is capable of mitigating the property degradation and is easy to form into a film. Polysilanes, because of their hole drift mobility, have attracted attention as a promising candidate and have been investigated.

However, while conventional polysilanes such as methylphenylpolysilane exhibit an excellent hole drift mobility (as high as 10⁻⁴cm²/V·s), these polysilanes have a high ionization potential which poses a problem. In constructing a useful device structure, a hole can not be properly injected from a charge generation layer or an electrode (such as ITO electrode) to a polysilane layer.

The polysilanes which have a high hole drift mobility at room temperature have been limited to those with aryl group such as phenyl group at the side chain. The polysilanes having phenyl group or the like entail problems of showing a poor film-forming property due to their rigidity in forming a thin film and creating cracks for their low flexibility, failing to show a satisfactory hole drift mobility.

In view of the foregoing problems, the manufacture of electrophotographic photoreceptors, organic electroluminescent devices and the like from polysilanes has not become commercially practical.

### Brief Description of the Drawings

FIG. 1 is an IR chart of the dichlorosilane prepared in Example 1.
FIG. 2 is a ¹H-NMR chart of the dichlorosilane prepared in Example 1.
FIG. 3 is a ¹H-NMR chart of the polysilane prepared in Example 1.
FIG. 4 is a ²⁹Si-NMR chart of the polysilane prepared in Example 1.
FIG. 5 is an IR chart of the dichlorosilane prepared in Example 5.
FIG. 6 is a ¹H-NMR chart of the dichlorosilane prepared in Example 5.
FIG. 7 is a ¹H-NMR chart of the polysilane prepared in Example 5.
FIG. 8 is an IR chart of the dichlorosilane prepared in Example 7.
FIG. 9 is a ¹H-NMR chart of the dichlorosilane prepared in Example 7.
FIG. 10 is a ¹H-NMR chart of the polysilane prepared in Example 7.

### Disclosure of the Invention

A primary object of the present invention is to provide polysilanes which show a good hole transporting characteristic when used for electrophotographic photoreceptors, organic electroluminescent devices or the like.

The present inventors conducted extensive research in view of the foregoing prior art problems and found the following. When n-alkyl group is introduced into the p-position of phenyl group in a polysilane having phenyl group at the side chain, the main chain of silicon is given a controlled skeleton structure due to the cohesion of side chains between each other, whereby a low ionization potential is involved, resulting in enhanced optoelectronic function such as proper injection of holes from a charge generation layer or an electrode. At the same time, the flexibility of n-alkyl group serves to improve the film-forming property, flexibility and other properties of the polysilane. Based on these findings, the inventors succeeded in substantially resolving or markedly alleviating the problems of conventional hole transporting materials.

According to the present invention, there are provided the following novel polysilanes and hole transporting materials:
1. a polysilane which has a structure represented by the formula (1) 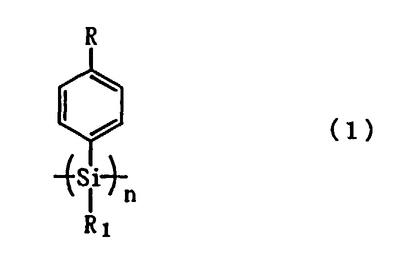 wherein R is n-alkyl group having 3 to 20 carbon atoms, R groups may be the same or at least two of them may be different from each other, R₁ is hydrogen atom and alkyl group, R₁ may be the same or at least two of them may be different from each other, and n is in the range of 10 to 20000;
2. a hole transporting material which has a structure represented by the following formula (1) and which is excellent in film-forming property and hole transporting characteristic 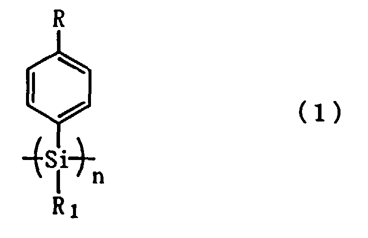 wherein R is n-alkyl group having 3 to 20 carbon atoms, R groups may be the same or at least two of them may be different from each other, R₁ is hydrogen atom and alkyl group, R₁ may be the same or at least two of them may be different from each other, and n is in the range of 10 to 20000;
3. a polysilane represented by the formula (2) 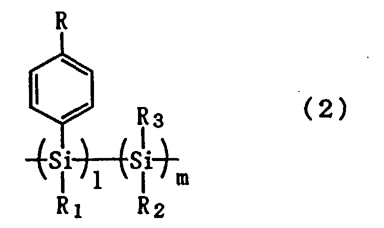 wherein R is n-alkyl group having 3 to 20 carbon atoms, R groups may be the same or at least two of them may be different from each other, R₁ is hydrogen atom and alkyl group, R₁ may be the same or at least two of them may be different from each other, R₂ and R₃ are hydrogen atom, alkyl group, aryl group, alkoxy group, amino group and silyl group, R₁, R₂ and R₃ may be the same or at least two of them may be different from each other, l is a positive number, m is zero or a positive number, and l+m is in the range of 10 to 20000;
4. a hole transporting material which has a structure represented by the following formula (2) and which is excellent in film-forming property and hole transporting characteristic 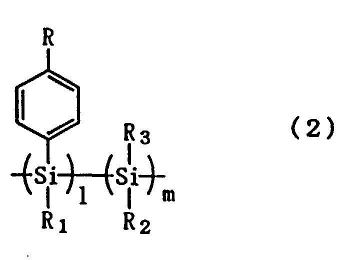 wherein R is n-alkyl group having 3 to 20 carbon atoms, R groups may be the same or at least two of them may be different from each other, R₁ is hydrogen atom and alkyl group, R₁ may be the same or at least two of them may be different from each other, R₂ and R₃ are hydrogen atom, alkyl group, aryl group, alkoxy group, amino group and silyl group, R₁, R₂ and R₃ may be the same or at least two of them may be different from each other, l is a positive number, m is zero or a positive number, and l+m is in the range of 10 to 20000.

Hereinafter, the inventions as defined above in items (1) to (4) are referred to as the first, second, third and fourth inventions, respectively, and they are collectively called merely "the present invention".

The polysilane of the first invention is represented by the formula (1). In the formula (1), R is n-alkyl group having 3 to 20 carbon atoms, R₁ is hydrogen atom and alkyl group having 1 to 10 carbon atoms, and the carbon atom adjacent to a silicon atom is the primary or secondary carbon atom. In view of the utility of the polysilane (1), R is more preferably alkyl group having 3 to 8 carbon atoms, and most preferably alkyl group having 3 to 5 carbon atoms. When R₁ is alkyl group, alkyl group having 1 to 6 carbon atoms is more preferred, and methyl group is the most preferred. The symbol n is in the range of 10 to 20000.

The polysilane of the formula (1) can be prepared from the corresponding silane monomer as the raw material by conventional methods. Specific examples of the methods include (a) a method wherein a dichlorosilane is subjected to dechlorination condensation polymerization in the presence of an alkali metal ("Kipping Method", J. Am. Chem. Soc., 103 (1981) 7352), (b) a method wherein a dichlorosilane is subjected to dechlorination condensation polymerization due to electrochemical reduction (J. Chem. Soc., Chem. Commun., 897 (1992), "Chemistry and Industry", 45, 1107 (1992), Japanese Unexamined Patent Publication Hei 5- 306340), (c) a method wherein a dihydrosilane is subjected to dehydrogenation condensation polymerization in the presence of a metal catalyst (Chem. Lett., 913 (1991)), and (d) a method wherein a dichlorosilane is subjected to reductive polymerization using a specific metal in the presence of a specific Li salt and a metal halide. The methods (a) to (c) are known while the chemical polymerization method (d) is novel and is disclosed in the specification of Japanese Patent Application No. Hei 9-2325.

This novel chemical polymerization method is described below. According to the method, Mg or Mg alloy is acted on at least one of dihalosilanes in an aprotic solvent in the presence of a specific Li salt and a metal halide, giving a polysilane. The dihalosilane is reduced by Mg or Mg alloy and polymerized into a polysilane. The Mg or Mg alloy is consumed into halogenated Mg.

Examples of the aprotic solvent are polar solvents such as tetrahydrofuran, 1,2-dimethoxyethane, propylene carbonate, acetonitrile, dimethylformamide, dimethylsulfoxide, bis(2-methoxyethyl)ether, 1,4-dioxane and methylene chloride; and non-polar solvents such as toluene, xylene, benzene, n-pentane, n-hexane, n-octane, n-decane and cyclohexane. These solvents can be used either alone or in combination. Preferred solvents are a polar solvent used singly, a mixture of at least two different polar solvents and a mixture of polar and non-polar solvents. The mixture of polar and non-polar solvents is used preferably at a former : latter ratio of approximately 1 : 0.01-20. Tetrahydrofuran and 1,2-dimethoxyethane are more preferred as a polar solvent usable either alone or in mixture with other solvents. The concentration of the dihalosilane in the solvent is usually about 0.05 to about 20 mol/l, preferably about 0.2 to about 15 mol/l, more preferably about 0.3 to about 13 mol/l.

Examples of the Li salt are LiCl, LiNO₃, Li₂CO₃, LiClO₄, etc. These Li salts can be used either alone or in combination. Of these Li salts, LiCl is the most preferred.

The concentration of the Li salt in the solvent is usually about 0.05 to about 5 mol/l, preferably about 0.1 to about 3 mol/l, more preferably about 0.15 to about 2 mol/l.

Preferred examples of the metal halide are FeCl₂, FeCl₃, FeBr₂, FeBr₃, AlCl₃, AlBr₃, ZnCl₂, SnCl₂, CoCl₂, VCl₃, TiCl₄, PdCl₂, SmCl₂, SmI₂, etc. Of these metal halides, FeCl₂ is more preferred. The concentration of the metal halide in the solvent is usually about 0.01 to about 6 mol/l, preferably about 0.03 to about 4 mol/l, more preferably about 0.05 to about 3 mol/l.

The shape of Mg or Mg alloy is not limited insofar as the reaction is feasible. Examples include powders, granules, ribbons, cut pieces, agglomerates, rods, flat plates and the like. Of these shapes, preferred are those which are large in specific surface area such as powders, granules, ribbons, cut pieces, etc. As to the amount of Mg or Mg alloy to be used, the amount of Mg is 2 mols or more per mol of the dihalosilane used, and the amount of Mg alloy is such that the amount of Mg component is 2 mols or more per mol of the dihalosilane used. When the amount of Mg or the amount of Mg component in the Mg alloy is more than 2 mols per mol of the dihalosilane used, the reaction time is shortened. Thus the use of at least 3 mols is more preferred and the use of at least 5 mols is the most preferred.

The chemical polymerization method is conducted as follows. For example, a dihalosilane, a Li salt, a metal halide and Mg or Mg alloy are placed, along with a solvent, into a hermetically closable reactor wherein preferably the mixture is mechanically or magnetically stirred to carry out the reaction. The shape of the reactor is not limited insofar as it has a structure which assures sealing.

The reaction time is variable depending on the amount of Mg or Mg alloy, Li salt and metal halide to be used and is usually about at least 30 minutes. The molecular weight of the reaction product can be controlled by adjustment of the reaction time. The degree of polymerization to be attained in the chemical polymerization method is preferably about 5 to about 1000.

The reaction temperature ranges from -20°C to the boiling point of the solvent used, preferably about -10 to about 50°C, more preferably about -5 to about 30°C.

When, for example, a dichlorosilane is used as the silane monomer in the preparation of the polysilane of the formula (1), an alkyltrichlorosilane and p-(n-propyl)bromobenzene are subjected to the Grignard reaction, whereby alkyl-p-(n-propyl)phenyldichlorosilane can be easily prepared. On the other hand, when a dihydrosilane is used as the silane monomer, an alkylchlorodihydrosilane and p-(n-propyl)bromobenzene are subjected to the Grignard reaction, whereby alkyl-p-(n-propyl)phenyldihydrosilane can be produced.

The hole transporting material of the second invention comprises the polysilane (1) of the first invention. The n-alkyl group of R having a small number of carbon atoms has a low cohesion, and lessens the decline of ionization potential. On the other hand, the n-alkyl group having a large number of carbon atoms softens the film and the film may become useless although depending on the purpose of use. Consequently, the n-alkyl group of 3 to 20 carbon atoms is proper in the polysilane (1), while the n-alkyl group of 3 to 8 carbon atoms is more preferred and the n-alkyl group of 3 to 5 carbon atoms is the most preferred in the hole transporting material. When the polysilane (1) contains two or more different R groups, it is desirable that the group R predominantly present have preferably 3 to 8 carbon atoms, more preferably 3 to 5 carbon atoms.

R₁ in the polysilane (1) is more preferably alkyl group having 1 to 6 carbon atoms, and most preferably methyl group.

The symbol n in the polysilane (1) is in the range of 10 to 20000, more preferably 15 to 5000, most preferably 20 to 1000.

The polysilane of the third invention is represented by the formula (2). The polysilane of the third invention is substantially the same as the polysilane of the first invention except that the former polysilane is a copolymer formed from a silicon unit having p-(n-alkyl)phenyl group and R₁ at the side chain and other silicon unit.

R₂ and R₃ in the polysilane (2) are hydrogen atom, alkyl group, aryl group, alkoxy group, amino group and silyl group. R₁, R₂ and R₃ in the polysilane (2) may be different from each other or at least two of them may be the same. Examples of the alkyl group include those having about 1 to about 10 carbon atoms among which those having 1 to 6 carbon atoms are more preferred. Examples of the aryl group are phenyl, naphthyl and p-alkoxyphenyl. Examples of the alkoxy group are those having about 1 to about 10 carbon atoms. When R₁, R₂ and R₃ are alkyl, aryl, alkoxy, amino and silyl, the hydrogen atom thereof may be substituted with other functional group such as alkyl, aryl or alkoxy (having the same number of carbon atoms as above).

In the polysilane of the formula (2), l is a positive number, m is zero or a positive number, and l+m is in the range of 10 to 20000.

The hole transporting material of the fourth invention comprises the polysilane (2) of the third invention. The n-alkyl group of R with a small number of carbon atoms has a low cohesion, and lessesns the decline of ionization potential. But the n-alkyl group with a large number of carbon atoms softens a film and the film may become useless although depending on the purpose of use. A suitable carbon number of n-alkyl group is variable with the ratio (l/l+m) of silicon unit having p-(n-alkyl)phenyl group. For example, if the ratio is 50%, the number of carbon atoms is more preferably 3 to 10, most preferably 4 to 6.

R₁ in the polysilane (2) is more preferably alkyl group having 1 to 6 carbon atoms and methyl group is the most preferred.

l+m in the polysilane (2) is in the range of about 10 to about 20000, more preferably 15 to 5000, most preferably 20 to 1000. A preferred range of l/m varies with the number of carbon atoms in the R group. For example, when the number of carbon atoms is 4, l/m is preferably 0.3 to 3.0, more preferably 0.5 to 2.0.

### Effects of the Invention

According to the present invention, the following remarkable effects can be achieved.
(a) The present invention provides hole transporting materials which permit proper injection of holes from a charge generation layer or an electrode. Consequently the produced electrophotographic photo-receptors have a significantly improved photosensitivity and the produced organic electroluminescent devices have an enhanced light emitting efficiency.
(b) The polysilanes of the invention can be easily formed into a film, and thus can produce a hole transporting layer which has a good film-forming property and high flexibility.

### Best Mode for Carrying Out the Invention

Given below are Examples to further clarify the features of the present invention.

### Example 1

### Synthesis of dichlorosilane

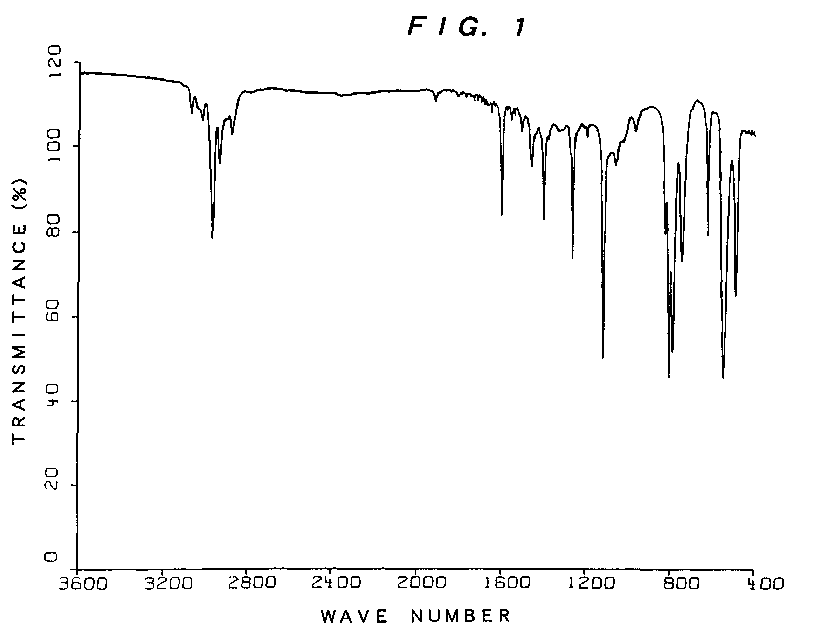

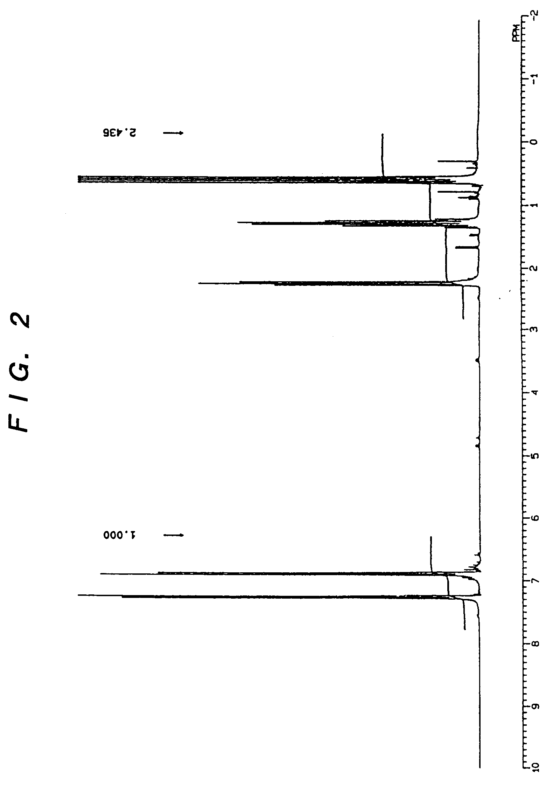

The air in a 500 ml 3-necked flask was replaced by argon gas. Then, 13.3 g of Mg (THF 50 ml) useful for Grignard reaction was placed into the flask to which 100 g (0.502 mol, THF 100 ml) of p-bromo-n-propylbenzene was added dropwise, giving a Grignard reagent. Thereafter 82 g (0.550 mol, THF 170 ml) of methyltrichlorosilane was placed into a 1000 ml 3-necked flask to which the obtained Grignard reagent was added dropwise over 30 minutes, followed by 3-hour stirring. The reflux temperature of THF was maintained by heat of reaction without application of heat. When the heat of reaction was cooled to room temperature, 600 ml of hexane was added for salting-out, the white precipitate is filtered off, the solvent was distilled off, 600 ml of hexane was added for salting-out again, the white precipitate was filtered off, the solvent was distilled off and the residue was purified by distillation under reduced pressure (boiling point of 99-101°C, 2 mmHg), whereby 59.5 g of (p-n-propylphenyl)methyldichlorosilane (yield 50.8%) was produced. An IR chart and ¹H-NMR chart of the obtained dichlorosilane are shown in FIG. 1 and FIG. 2, respectively.

### Synthesis of polysilane

Anhydrous lithium chloride (0.4 g ) and 0.24 g of anhydrous ferrous chloride were placed into a 30 ml 3-necked flask (hereinafter referred to as "reactor") provided with a three way stop-cock, an anode of Mg (1 cm (diameter) X 5 cm) and a cathode of stainless steel (SUS 304) (1 cm X 1 mm X 5 cm). The mixture was heated to 50°C and the pressure was reduced to 1 mmHg to dry the lithium chloride and ferrous chloride. Thereafter deoxidized dry nitrogen was introduced into the reactor, followed by addition of 15 ml of tetrahydrofuran dried over sodium-benzophenoneketyl. Then, 2.33 g (10 mmols) of (p-n-propylphenyl)methyldichlorosilane purified by distillation was added with a syringe. The reaction mixture was stirred by a magnetic stirrer and a current was applied from a constant current power source while maintaining the reactor at room temperature with a water bath. A current was passed for about 21.3 hours for the passed electricity to reach 4.0 F/mol based on dichlorosilane.

After completion of reaction, 20 ml of 1N hydrochloric acid was added to the reaction mixture, followed by addition of 80 ml of distilled water. The mixture was extracted with 100 ml of ether and reprecipitated by addition of 80 ml of poor solvent ethanol and 4 ml of good solvent tetrahydrofuran.

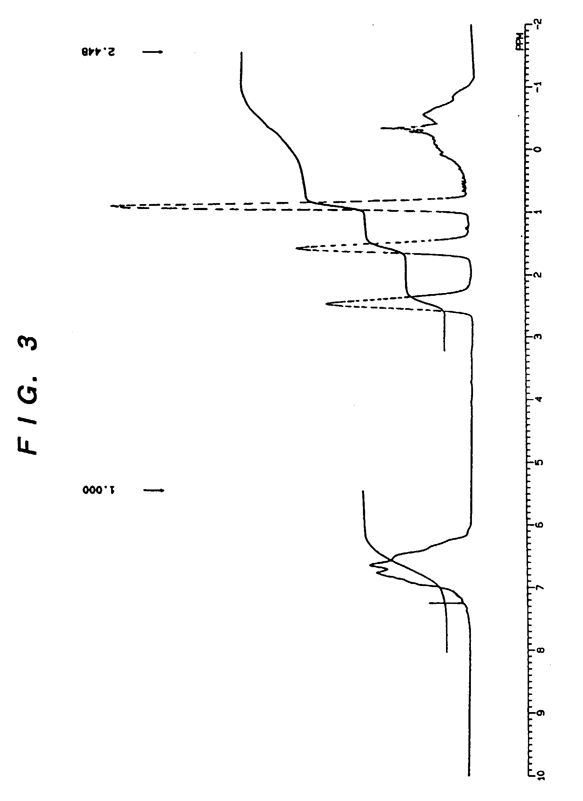

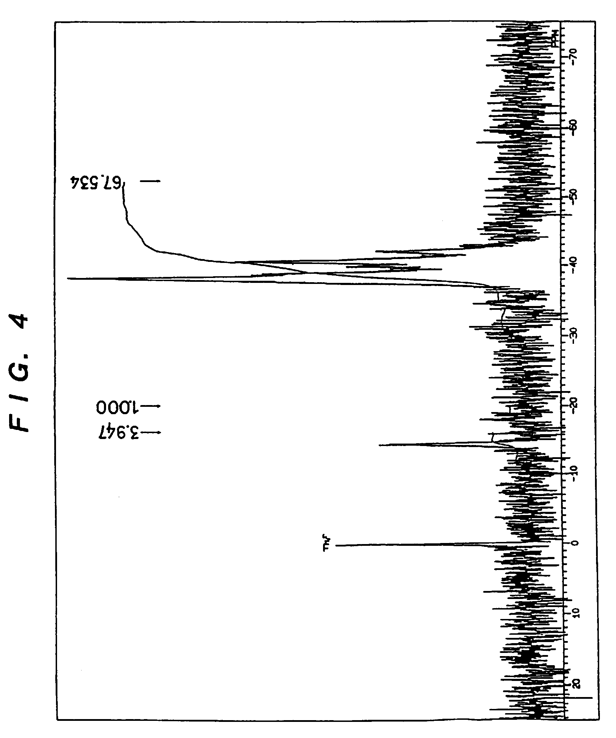

The above procedure gave (p-n-propylphenyl) methylpolysilane having a weight average molecular weight of 18600 in a yield of 52%. A ¹H-NMR chart and a ²⁹Si-NMR chart of the obtained polysilane are shown in FIG. 3 and FIG. 4, respectively.

The obtained polysilane was evaluated as a hole transporting material in the following manner. The results are shown below in Table 1 together with the results of evaluation made in subsequent Examples and Comparative Examples. In Table 1, the polysilanes obtained in Examples 1-7 are indicated as Samples 1-7, respectively and the polysilanes obtained in Comparative Examples 1-4 are indicated as Samples 8-11, respectively.

### Evaluation of film-forming property and flexibility

A 10 wt% (wt% will be hereinafter referred to simply as "%") toluene solution of polysilane was cast on a 100 µm-thick aluminum substrate. The coated substrate was dried at 55°C for 2 hours under pressure being reduced by a rotary pump. The thickness of the polysilane film was about 25 µm. The polysilane-coated aluminum substrate was bent and visually inspected for the occurrence or non-occurrence of cracks to evaluate the film-forming property and the flexibility.

### Evaluation of hole transporting characteristic

A 25% toluene solution of polysilane was spin-coated on an aluminum-deposited glass substrate. The coated substrate was dried at 55°C for 2 hours under pressure being reduced by a rotary pump, whereby a thin film of polysilane having a thickness of about 5.0 µm was formed. A semitransparent gold film was formed as a top electrode by DC sputtering. The time of flight of the obtained sample was measured by direct excitation of nitrogen pulse laser (wavelength 337 nm) to determine from the transit pulse shape whether transport was dispersive or non-dispersive. The hole drift mobility was also evaluated from the measurement.

### Evaluation of electrophotographic property

A solution was prepared by dispersing a mixture of titanyl phthalocyanine, polyvinyl butyral and cellosolve acetate at a weight ratio of 1 : 1 : 18 by a ball mill. The solution was bar-coated on a 100 µm-thick aluminum substrate and dried to form a charge generation layer having a thickness of about 0.5 µm. A 30% toluene solution of polysilane was bar-coated on the charge generation layer. The film was dried in an air-circulation oven at 100°C for about 1 hour. The half-decay exposure of the obtained sample was measured by a static-mode electrophotographic measurement using "EPA-8200" manufactured by Kawaguchi Denki Co., Ltd..

### Evaluation of electroluminescent property

A 1500 Å-thick hole injection layer was spin-coated from a 5% toluene solution of polysilane on an ITO deposited glass substrate. Alq3 {tris(8-quinolinolato)aluminum (III)} light emitting layer (500 Å) was formed by vacuum deposition. A cathode (1500 Å) was formed by vacuum deposition using an alloy of Mg and Ag at a weight ratio of 10 : 1, whereby an electroluminescent device was produced.

15 V was applied to the device. The output of emitted light was measured by a PIN photodiode.

### Example 2

The same procedure as in Example 1 was repeated to produce (p-n-propylphenyl)methyldichlorosilane. Then, a polysilane was prepared from the obtained compound as the starting material by the Kipping method.

### Synthesis of polysilane

A mechanical stirrer and a reflux condenser were fitted to a three-necked flask. Then the air inside the reactor was replaced with argon gas. Into the reactor were placed 9.3 g of 40% sodium dispersion (manufactured by Aldrich Chemical Co., Ltd.), 83 ml of dry toluene and 24 ml of diglyme. The mixture was heated in an oil bath (bath temperature 130°C), followed by adding 18.6 g (80 mmols) of (p-n-propylphenyl)methyldichlorosilane. Thereafter the mixture was continuously heated at 110°C for 5 hours. After stopping heating, stirring was continued overnight. Then, 25 ml of 2-propanol was added to the reaction mixture, followed by addition of 160 ml of 1N hydrochloric acid and 640 ml of distilled water. The mixture was extracted with 800 ml of ether and reprecipitated by addition of 320 ml of poor solvent ethanol and 16 ml of good solvent tetrahydrofuran.

The above procedure gave (p-n-propylphenyl)methylpolysilane having a weight average molecular weight of 49700 in a yield of 21%.

### Example 3

6.0 g of granular magnesium, 1.6 g of anhydrous lithium chloride (LiCl) and 0.96 g of anhydrous ferrous chloride (FeCl₂) were placed into a 100 ml eggplant type flask equipped with a three way stop-cock. The mixture was heated to 50°C and the pressure was reduced to 1 mmHg to dry the contents of the reactor. Thereafter dry argon gas was introduced into the reactor after which 60 ml of tetrahydrofuran dried over sodium-benzophenoneketyl was added, followed by stirring at room temperature for about 30 minutes. Then, 9.39 g (40 mmols) of (p-n-propylphenyl)methyldichlorosilane purified by distillation was added with a syringe, followed by stirring at room temperature for about 12 hours. After completion of reaction, the reaction mixture was poured into 50 ml of 1N hydrochloric acid and was extracted with 100 ml of ether. The ether layer was washed twice with 50 ml of pure water and dried over anhydrous magnesium sulfate. Then the ether was distilled off, giving a crude polysilane containing a low molecular component. The crude polysilane was reprecipitated with 20 ml of good solvent tetrahydrofuran and 400 ml of poor solvent ethanol.

The above procedure gave (p-n-propylphenyl)methylpolysilane having a weight average molecular weight of 16200 in a yield of 43%.

### Example 4

A reaction for synthesis of polysilane was carried out in the same manner as in Example 1 with the exception of using a mixture of 1.55 g (6.7 mmols) of (p-n-propylphenyl)methyldichlorosilane and 0.54 g (3.3 mmols) of methylphenyldichlorosilane in place of 2.33 g of (p-n-propylphenyl)methyldichlorosilane. This procedure gave (p-n-propylphenyl)methyl-co-methylphenylpolysilane with a weight average molecular weight of 17700 in a yield of 56%.

### Example 5

For synthesis of (p-n-butylphenyl)methyldichlorosilane as dichlorosilane, the same procedure as in Example 1 was followed with the exception of using p-bromo-n-butylbenzene in place of p-bromo-n-propylbenzene used in the preparation of dichlorosilane in Example 1.

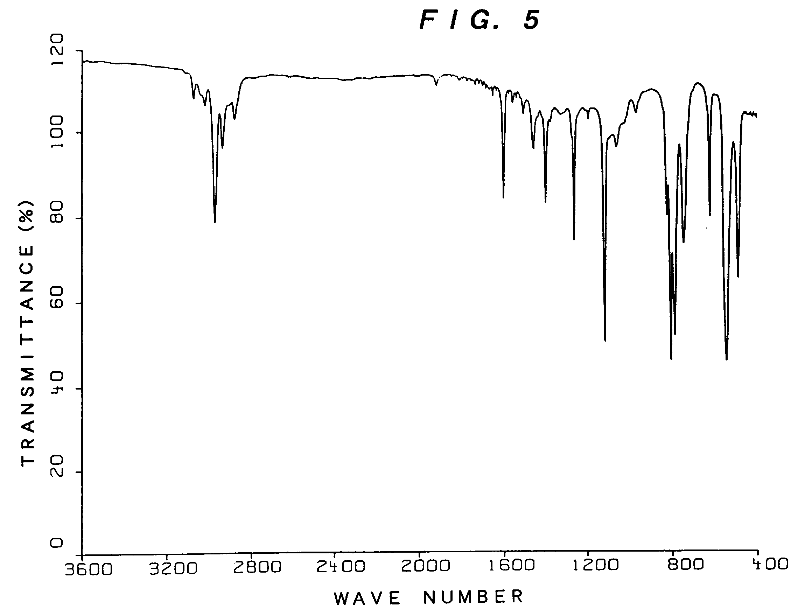

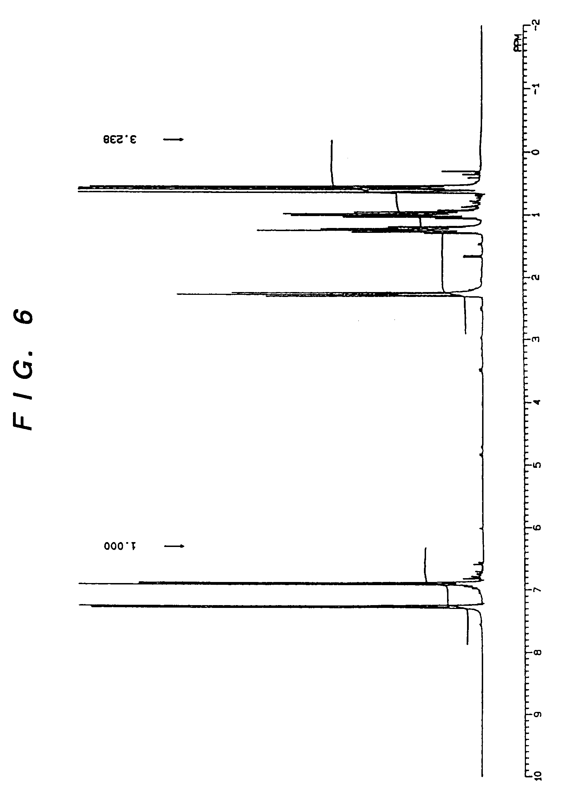

The above procedure gave the desired (p-n-butylphenyl)methyldichlorosilane (b.p. 108-112°C (2 mmHg)) in a yield of 50.4%. An IR chart and a ¹H-NMR chart of the obtained dichlorosilane are shown in FIG. 5 and FIG. 6, respectively.

A reaction for synthesis of polysilane was carried out in the same manner as in Example 1 with the exception of using a mixture of 1.24 g (5 mmols) of (p-n-butylphenyl)methyldichlorosilane and 0.96 g (5 mmols) of methylphenyldichlorosilane in place of 2.33 g of (p-n-propylphenyl)methyldichlorosilane. This procedure gave (p-n-butylphenyl)methyl-co-methylphenylpolysilane with a weight average molecular weight of 20900 in a yield of 43%.

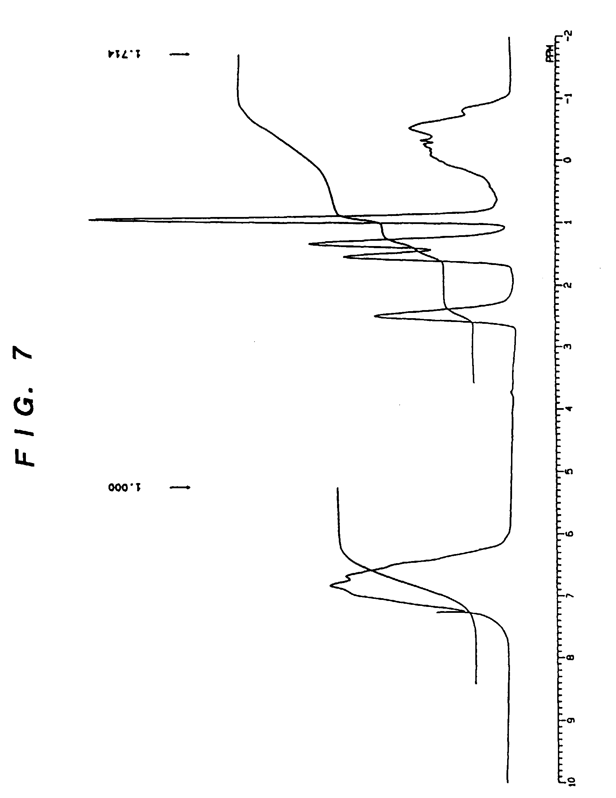

A ¹H-NMR chart of the obtained polysilane is shown in FIG. 7.

### Example 6

For synthesis of (p-n-hexylphenyl)methyldichlorosilane as dichlorosilane, the same procedure as in Example 1 was followed with the exception of using p-bromo-n-hexylbenzene in place of p-bromo-n-propylbenzene used in the preparation of dichlorosilane in Example 1. The above procedure gave the desired (p-n-hexylphenyl)methyldichlorosilane (b.p. 127-130°C (2 mmHg)) in a yield of 47.0%.

Then, a reaction for synthesis of polysilane was carried out in the same manner as in Example 1 with the exception of using a mixture of 0.55 g (2 mmols) of (p-n-hexylphenyl)methyldichlorosilane and 1.53 g (8 mmols) of methylphenyldichlorosilane in place of 2.33 g of (p-n-propylphenyl)methyldichlorosilane. This procedure gave (p-n-hexylphenyl)methyl-co-methylphenylpolysilane with a weight average molecular weight of 21100 in a yield of 39%.

### Example 7

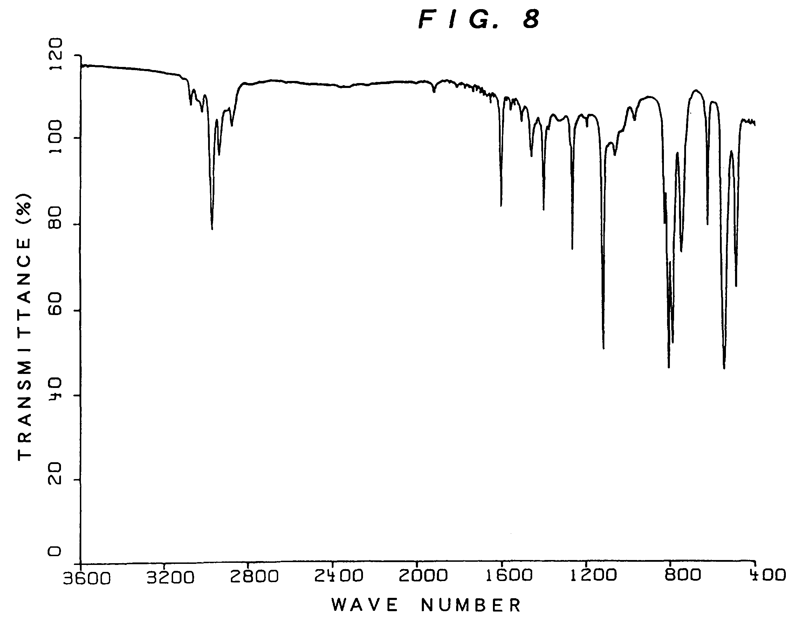

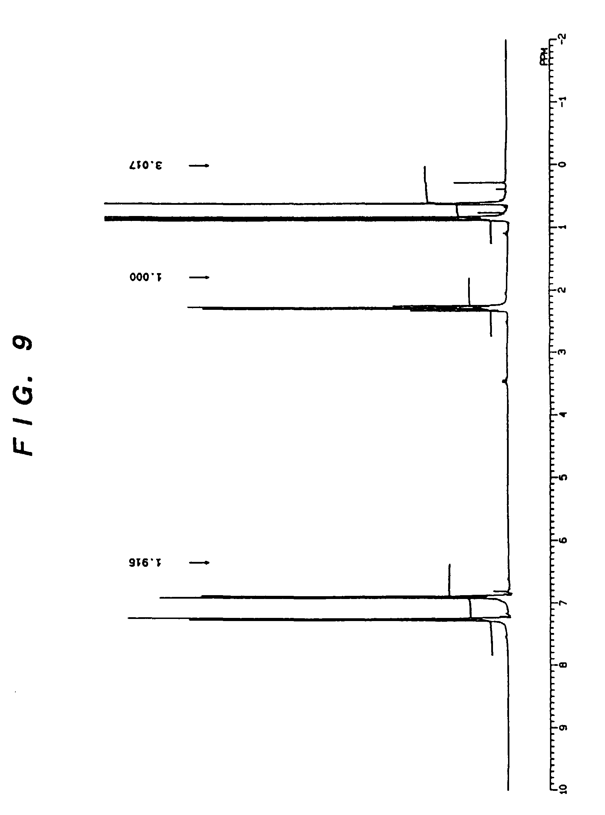

For synthesis of (p-ethylphenyl)methyldichlorosilane as dichlorosilane, the same procedure as in Example 1 was followed with the exception of using p-bromo-n-ethylbenzene in place of p-bromo-n-propylbenzene used in the preparation of dichlorosilane in Example 1. The above procedure gave the desired (p-ethylphenyl)methyldichlorosilane (b.p. 80°C (2 mmHg)). An IR chart and a ¹H-NMR chart of the obtained dichlorosilane are shown in FIG. 8 and FIG. 9, respectively.

Then, a polysilane was prepared using the (p-ethylphenyl)methyldichlorosilane and the (p-n-butylphenyl)methyldichlorosilane prepared in Example 4.

That is to say, a reaction for synthesis of polysilane was carried out in the same manner as in Example 1 with the exception of using a mixture of 1.24 (5 mmols) of (p-n-butylphenyl)methyldichlorosilane and 1.10 g (5 mmols) of (p-ethylphenyl)methyldichlorosilane in place of 2.33 g of (p-n-propylphenyl)methyldichlorosilane. This procedure gave (p-n-butylphenyl)methyl-co-(p-ethylphenyl)methylpoly-silane with a weight average molecular weight of 22700 in a yield of 56%.

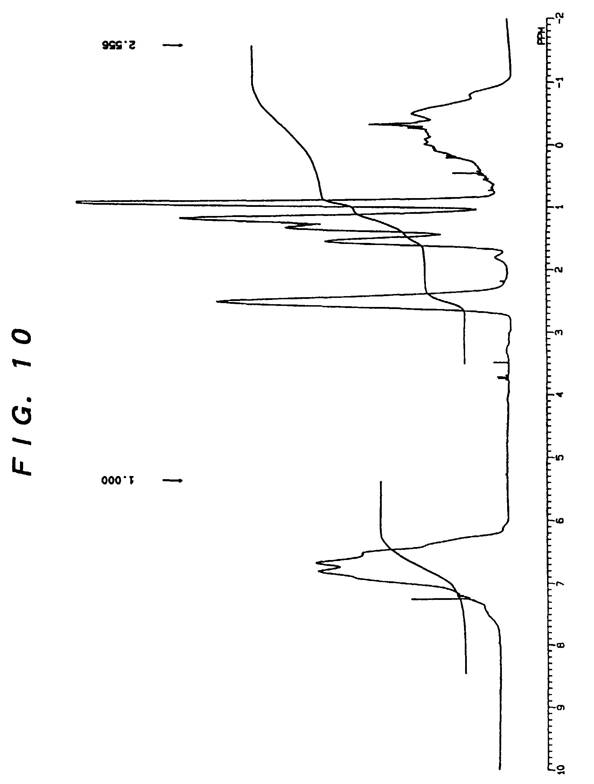

A ¹H-NMR chart of the obtained polysilane is shown in FIG. 10.

### Comparative Example 1

A reaction for synthesis of polysilane was carried out in the same manner as in Example 1 with the exception of using 1.91 g (10 mmols) of methylphenyldichlorosilane in place of 2.33 g of (p-n-propylphenyl)methyldichlorosilane. This procedure gave methylphenylpolysilane with a weight average molecular weight of 17800 in a yield of 51%.

### Comparative Example 2

The same procedure as in Example 1 was repeated with the exception of using p-bromo-t-butylbenzene in place of p-bromo-n-propylbenzene in the preparation of dichlorosilane, giving (p-t-butylphenyl)methyldichlorosilane.

A reaction for synthesis of polysilane was carried out in the same manner as in Example 1 with the exception of using 2.47 g (10 mmols) of (p-t-butylphenyl)methyldichlorosilane in place of 2.33 g of (p-n-propylphenyl)methyldichlorosilane. This procedure gave (p-t-butylphenyl)methylpolysilane with a weight average molecular weight of 13700 in a yield of 18%.

### Comparative Example 3

A reaction for synthesis of polysilane was carried out in the same manner as in Example 1 with the exception of using 2.05 g (10 mmols) of commercially available (p-methylphenyl)methyldichlorosilane in place of 2.33 g of (p-n-propylphenyl)methyldichlorosilane. This procedure gave (p-methylphenyl)methylpolysilane with a weight average molecular weight of 19900 in a yield of 40%.

### Comparative Example 4

The same procedure as in Example 1 was conducted with the exception of using p-bromo-biphenylbenzene in place of p-bromo-n-propylbenzene in the preparation of dichlorosilane. This procedure gave (p-biphenyl)methyldichlorosilane. A reaction for synthesis of polysilane was carried out in the same manner as in Example 1 with the exception of using 2.70 g (10 mmols) of (p-biphenyl)methyldichlorosilane in place of 2.33 g of (p-n-propylphenyl) methyldichlorosilane. This procedure gave (p-biphenyl)methylpolysilane with a weight average molecular weight of 10700 in a yield of 17%.

**Table 1**

| Sample | Film-forming property | Hole transporting characteristic | | Electrophotographic property | Electroluminescent property |
|---|---|---|---|---|---|
| | Flexibility | Pulse shape | Hole mobility (10⁻⁴cm²/V·s) | Half-decay exposure (Lux·s) | Output of emitted light |
| 1 | A | A | 3.2 | 0.64 | 100 |
| 2 | A | A | 2.2 | 0.70 | 89 |
| 3 | A | A | 2.5 | 0.68 | 92 |
| 4 | A | A | 3.0 | 0.91 | 76 |
| 5 | A | A | 2.8 | 1.02 | 63 |
| 6 | A | A | 2.7 | 1.25 | 59 |
| 7 | A | A | 2.9 | 0.60 | 108 |
| 8 | B | A | 2.6 | 1.57 | 18 |
| 9 | B | A | 0.9 | 6.14 | 11 |
| 10 | B | B | 0.4 | Failed | 5 |
| 11 | C | B | 0.5 | Failed | 0 |
| (Note) (1) The film-forming property and the flexibility were evaluated according to the following criteria: A...No crack occurred after bending. B...No crack occurred before bending, but crack was developed by bending. C...Crack existed before bending. (2) Pulse shape: A...non-dispersive type B...dispersive type (3) Output of emitted light: a relative value when the output of Sample 1 was taken as 100. | | | | | |

## Claims

1. A polysilane which has a structure represented by the following formula (1) 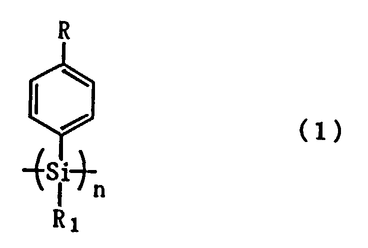 wherein R is n-alkyl group having 3 to 20 carbon atoms, R groups may be the same or at least two of them may be different from each other, R₁ is hydrogen atom and alkyl group, R₁ may be the same or at least two of them may be different from each other, and n is in the range of 10 to 20000.

2. A hole transporting material which has a structure represented by the following formula (1) and which is excellent in film-forming property and hole transporting characteristic 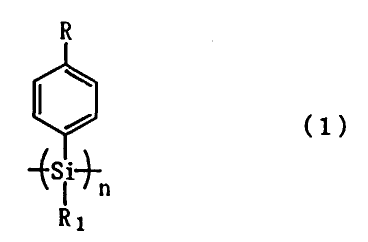 wherein R is n-alkyl group having 3 to 20 carbon atoms, R groups may be the same or at least two of them may be different from each other, R₁ is hydrogen atom and alkyl group, R₁ may be the same or at least two of them may be different from each other, and n is in the range of 10 to 20000.

3. A polysilane represented by the following formula (2) 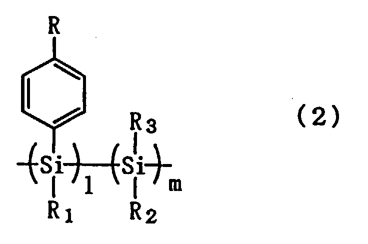 wherein R is n-alkyl group having 3 to 20 carbon atoms, R groups may be the same or at least two of them may be different from each other, R₁ is hydrogen atom and alkyl group, R₁ may be the same or at least two of them may be different from each other, R₂ and R₃ are hydrogen atom, alkyl group, aryl group, alkoxy group, amino group and silyl group, R₁, R₂ and R₃ may be the same or at least two of them may be different from each other, l is a positive number, m is zero or a positive number, and l+m is in the range of 10 to 20000.

4. A hole transporting material which has a structure represented by the following formula (2) and which is excellent in film-forming property and hole transporting characteristic 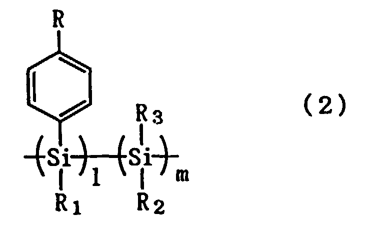 wherein R is n-alkyl group having 3 to 20 carbon atoms, R groups may be the same or at least two of them may be different from each other, R₁ is hydrogen atom and alkyl group, R₁ may be the same or at least two of them may be different from each other, R₂ and R₃ are hydrogen atom, alkyl group, aryl group, alkoxy group, amino group and silyl group, R₁, R₂ and R₃ may be the same or at least two of them may be different from each other, l is a positive number, m is zero or a positive number, and l+m is in the range of 10 to 20000.
